# EUROPÄISCHE PATENTSCHRIFT

(11) **EP 3 284 435 B1**
(45) Veröffentlichungstag und Bekanntmachung des Hinweises auf die Patenterteilung: **14.11.2018**
(21) Anmeldenummer: 16184689.4
(22) Anmeldetag: 18.08.2016
(51) Int. Cl.: A61C 1/14, A61C 3/03

(54) **WERKZEUG-KUPPLUNGSVORRICHTUNG FÜR EIN SCHWINGUNGSÜBERTRAGENDES HANDSTÜCK**
TOOL COUPLING DEVICE FOR A VIBRATION TRANSMITTING HANDPIECE
DISPOSITIF D'ACCOUPLEMENT D'OUTIL POUR UN PORTE-OUTILS TRANSMETTANT DES VIBRATIONS

(43) Veröffentlichungstag der Anmeldung: 21.02.2018
(73) Patentinhaber: W & H Dentalwerk Bürmoos GmbH, 5111 Bürmoos (AT)
(72) Erfinder: EDER, Karlheinz, 5152 Michaelbeuern (AT); BRUGGER, Dr., Wilhelm, 5071 Wals-Siezenheim (AT)
(74) Vertreter: Benda, Ralf

(56) Entgegenhaltungen:
- EP-A1- 2 160 997
- EP-A1- 2 982 334
- JP-A- 2015 159 889

## Beschreibung

Die vorliegende Erfindung bezieht sich auf eine Werkzeug-Kupplungsvorrichtung zur Übertragung einer Antriebsbewegung und gegebenenfalls eines Arbeitsmediums von einem schwingungsübertragenden Handstück auf ein medizinisches, insbesondere zahnärztliches, und mit Schwingungen betreibbares Werkzeug.

Derartige Kupplungsvorrichtungen dienen dazu ein medizinisches Werkzeug, welches insbesondere zum Entfernen von Zahnstein ausgebildet ist, an einem Handstück, welches eine Schwingungsquelle aufweist, zu befestigen. Die Schwingungsquelle ist bevorzugt als Piezoantrieb, als magnetostriktiver oder pneumatischer Antrieb ausgebildet und aktiviert das Werkzeug mittels Schall oder Ultraschall.

Eine derartige Kupplungsvorrichtung für ein medizinisches Handstück und Werkzeug ist insbesondere aus der EP 2 160 997 A1 bekannt. Die Patentanmeldung EP 2 982 334 A1 offenbart eine Kupplungsvorrichtung gemäß dem Oberbegriff des Anspruchs 1.

Diese Kupplungsvorrichtung zur lösbaren Verbindung eines Werkzeuges mit einem medizinischen Handstück umfasst ein erstes am Werkzeug vorgesehenes Kupplungselement und ein zweites am Handstück angeordnetes Kupplungselement. Beide Kupplungselemente werden mittels einer Kugel-Laufbahn Verbindung und einer Anlagefläche zur reibschlüssigen Verbindung miteinander verbunden, um einen festen Sitz zu gewährleisten. Nur durch eine feste Verbindung des Werkzeuges mit der Schwingungsquelle kann eine Übertragung der Schwingungsenergie auf das Werkzeug erfolgen. Die Kugel-Laufbahn Verbindung weist eine im Wesentlichen wendelförmig um die Längssachse der Kupplungsvorrichtung verlaufenden Führungsnut auf, in die ein Führungselement des anderen Kupplungselements eingreift. Die Anlagefläche zur reibschlüssigen Verbindung ist bevorzugt durch eine konische Anlagefläche an dem Werkzeug und einer komplementären Anlagefläche an dem Handstück gebildet. Durch das Verdrehen der beiden Kupplungselemente zueinander wird ein Reibschluss zwischen den beiden Anlageflächen hergestellt.

Der vorliegenden Erfindung liegt die Aufgabe zugrunde, eine Kupplungsvorrichtung zur Übertragung einer, insbesondere schwingenden, Antriebsbewegung von einem schwingungsübertragenden Handstück auf ein medizinisches Werkzeug zu schaffen, welche bei einer vereinfachten Handhabung es insbesondere ermöglicht, eine fehlerhafte Verbindung zwischen dem Werkzeug und dem Handstück zu vermeiden.

Gemäß einem Ausführungsbeispiel umfasst die Kupplungsvorrichtung zur Übertragung einer, insbesondere schwingenden, Antriebsbewegung von einem schwingungsübertragenden Handstück auf ein medizinisches, insbesondere zahnärztliches, vorzugsweise mit Schwingungen betreibbares Werkzeug, ein erstes am Handstück vorgesehenes Kupplungselement und ein zweites am Werkzeug vorgesehenes Kupplungselement, wobei eines der beiden Kupplungselemente als Kupplungsvorsprung ausgebildet ist, der in eine Kupplungsausnehmung an dem anderen Kupplungselement einsetzbar ist. Der Kupplungsvorsprung und die Kupplungsausnehmung weisen jeweils einen ersten Abschnitt zur lösbaren Verbindung der beiden Kupplungselemente sowie jeweils einen zweiten Abschnitt zur Positionierung der beiden Kupplungselemente entlang deren gemeinsamen Längs- oder Drehachse auf, wobei der zweite Abschnitt an dem Kupplungsvorsprung und an der Kupplungsausnehmung derart ausgebildet ist, dass die beiden Kupplungselemente zueinander positionierbar, aneinander geführt und entlang der gemeinsamen Längs- oder Drehachse verschiebbar sind, bevor die beiden Kupplungselemente mittels des ersten Abschnitts lösbar miteinander verbindbar sind.

Die ersten Abschnitte zur lösbaren Verbindung der beiden Kupplungselemente weisen vorzugsweise jeweils ein Gewinde mit jeweils zumindest einem Gewindegang auf. An einem Ende jenes Gewindes, das an dem als Kupplungsvorsprung ausgebildeten Kupplungselement angeordnet ist, ist insbesondere ein den Kupplungsvorsprung umlaufender Führungsring oder Flansch vorgesehen, an dem der zumindest eine Gewindegang des Gewindes endet, so dass eine Mantelfläche des Führungsrings oder Flansches von dem zumindest einen Gewindegang des Gewindes nicht durchbrochen ist. Vorzugsweise ist die Mantelfläche des Führungsrings oder Flansches als durchgängige, zylindrische Mantelfläche ausgebildet, wodurch, wie aus dem Nachstehenden ersichtlich ist, eine besonders gute und stabile Führung und Lagerung der beiden Kupplungselemente aneinander erzielbar ist.

Der Führungsring oder Flansch mit der vorzugsweise durchgängigen, zylindrischen Mantelfläche bildet somit einen zusätzlichen Lagerabschnitt (zusätzlich zu dem zweiten Abschnitt zur Positionierung der beiden Kupplungselemente entlang deren gemeinsamen Längs- oder Drehachse) zum Führen und Lagern der beiden Kupplungselemente aneinander. Demgemäß ist der Führungsring insbesondere derart ausgebildet ist, dass die beiden Kupplungselemente zueinander positionierbar, aneinander geführt und entlang der gemeinsamen Längs- oder Drehachse verschiebbar sind, bevorzugt bevor die beiden Kupplungselemente mittels des ersten Abschnitts lösbar miteinander verbindbar sind. Vorzugsweise ist der Führungsring, insbesondere gleich wie der zweite Abschnitt bzw. gemeinsam mit dem zweiten Abschnitt, in der Kupplungsausnehmung des anderen Kupplungselements einsetzbar. Vorzugsweise sind der Führungsring und der zweiten Abschnitt gemeinsam entlang der gemeinsamen Längs- oder Drehachse verschiebbar, insbesondere bevor die beiden Kupplungselemente mittels des ersten Abschnitts lösbar miteinander verbindbar sind, wobei aufgrund des Vorsehens des Führungsrings eine verbesserte und stabilere Lagerung und Führung in dem Kupplungsvorsprung und der Kupplungsausnehmung erzielt wird, insbesondere vor dem Verbinden der beiden Kupplungselemente durch die Gewinde.

Des Weiteren erhöht der an dem Gewinde angeordnete Führungsring oder Flansch die Robustheit und Stabilität des Gewindes. Vorzugsweise weist das Gewinde einen maximalen Drehwinkel von 540° oder 1,5 Umdrehungen bis zum Anschlag auf.

Gemäß einem ersten Ausführungsbeispiel der Kupplungsvorrichtung ist der erste Abschnitt zur lösbaren Verbindung beider Kupplungselemente durch eine Schraubverbindung, bevorzugt durch ein mehrgängiges, zum Beispiel ein dreigängiges, Gewinde, ausgebildet. Zur Positionierung der beiden Kupplungselemente zueinander weist / weisen der zweite Abschnitt und / oder der an dem Ende des Gewindes angeordnete Führungsring bevorzugt eine zylindrische Führungsfläche an dem Kupplungsvorsprung und in der Kupplungsausnehmung auf. Vorzugsweise beträgt das Anzugsmoment der Schraubverbindung oder der Gewinde etwa zwischen 30 Ncm - 70 Ncm, vorzugsweise 40 Ncm - 60 Ncm, insbesondere in etwa 50 Ncm.

Gemäß einem zweiten Ausführungsbeispiel der Kupplungsvorrichtung ist der erste Abschnitt zur lösbaren Verbindung der beiden Kupplungselemente vor dem zweiten Abschnitt an dem vorderen Ende der Mantelfläche des Kupplungsvorsprungs und an dem hinteren Ende der Mantelfläche der Kupplungsausnehmung angeordnet. Um den ersten Abschnitt des Kupplungsvorsprungs leichter in den korrespondierenden Abschnitt der Kupplungsausnehmung einführen zu können, weist der Kupplungsvorsprung an seinem vorderen Ende eine Fase auf.

Gemäß einem dritten Ausführungsbeispiel der Kupplungsvorrichtung ist der Durchmesser des ersten Abschnitts an dem Kupplungsvorsprung und an der Kupplungsausnehmung kleiner als der Durchmesser des an dem Ende des Gewindes angeordneten Führungsrings und / oder des zweiten Abschnitts an dem Kupplungsvorsprung und an der Kupplungsausnehmung. Des Weiteren ist die Länge des ersten Abschnitts an dem Kupplungsvorsprung bevorzugt kleiner als die Länge des zweiten Abschnitts an der Kupplungsausnehmung, so dass beide Kupplungselemente mittels des zweiten Abschnitts zueinander geführt und entlang der gemeinsamen Drehachse verschiebbar sind, bevor die beiden Kupplungselemente mittels des ersten Abschnitts miteinander verbindbar sind. Um den ersten Abschnitt an dem Kupplungsvorsprung bei der Übertragung der Schwingungs-Antriebsbewegung von dem Handstück auf das Werkzeug zu entlasten und / oder die Bruchgefahr des Kupplungsvorsprungs zu verringern, weist der zweite Abschnitt an dem Kupplungsvorsprung bevorzugt eine rillenförmige Vertiefung oder Einschnürung auf.

Gemäß einem vierten Ausführungsbeispiel der Kupplungsvorrichtung ist zumindest eines der beiden Kupplungselemente zumindest teilweise aus Titan oder einer Titanlegierung gefertigt. Des Weiteren ist bevorzugt zumindest eines der beiden Kupplungselemente zumindest teilweise mit einer verschleißfesten Beschichtung versehen. Alternativ weist zumindest eines der beiden Kupplungselemente eine gehärtete Oberfläche, die insbesondere Titannitrid umfasst, auf.

Gemäß allen voranstehenden Ausführungsbeispielen weisen beide Kupplungselemente bevorzugt einen Fluidkanal auf, so dass dem Werkzeug ein Arbeitsmedium zuführbar ist. Des Weiteren weisen beide Kupplungselemente bevorzugt eine Anschlagfläche auf, so dass beide Kupplungselemente in axialer Richtung zur gemeinsamen Drehachse miteinander verspannbar sind. Die Anschlagfläche ist vorzugsweise als Planfläche oder Plananschlag ausgebildet.

Zusätzlich ist gemäß allen voranstehenden Ausführungsbeispielen an einem der beiden Kupplungselemente bevorzugt ein Auflagebereich, insbesondere in Form eines Mehrkants, zum Anlegen eines Werkzeugschlüssels vorgesehen.

Gemäß einem Ausführungsbeispiel eines Verfahrens zum lösbaren Verbinden eines medizinischen, insbesondere zahnärztlichen, vorzugsweise mit Schwingungen betreibbaren Werkzeugs mit einem schwingungsübertragenden Handstück mittels einer Kupplungsvorrichtung nach einem der vorherstehenden Ausführungsbeispiele, weist dieses folgende Schritte auf:
- Positionieren der beiden Kupplungselemente entlang deren gemeinsamer Längs- oder Drehachse durch das Einführen des Kupplungsvorsprungs in die Kupplungsausnehmung bis der zweite Abschnitt des Kupplungsvorsprungs zumindest teilweise in dem zweiten Abschnitt der Kupplungsausnehmung angeordnet ist,
- Verschieben der beiden Kupplungselemente zueinander und entlang deren gemeinsamen Längs- oder Drehachse bis der erste Abschnitt des Kupplungsvorsprungs zumindest teilweise in den ersten Abschnitt der Kupplungsausnehmung greift,
- Verbinden beider Kupplungselemente mittels des ersten Abschnitts an dem Kupplungsvorsprung und an der Kupplungsausnehmung.

Vorzugsweise umfasst das Positionieren der beiden Kupplungselemente entlang deren gemeinsamer Längs- oder Drehachse durch das Einführen des Kupplungsvorsprungs in die Kupplungsausnehmung auch, dass der an dem Ende des Gewindes angeordnete Führungsring oder Flansch in der Kupplungsausnehmung angeordnet oder aufgenommen ist.

Vorzugsweise erstreckt sich der an dem Gewinde vorgesehene Führungsring oder Flansch radial von dem Kupplungselement und / oder dem Kupplungsvorsprung. Vorzugsweise ist der Führungsring scheibenförmig ausgebildet. Vorzugsweise erstreckt sich die Längs- oder Drehachse zentrisch durch den (scheibenförmigen) Führungsring.

Bevorzugt weist / weisen der Führungsring oder Flansch und / oder die Mantelfläche des Führungsrings zumindest einen Rücksprung oder eine Aussparung auf, wodurch in vorteilhafter Weise das Verschieben und Führen der beiden Kupplungselemente aneinander entlang der gemeinsamen Längsachse aufgrund verringerter Reibung vereinfacht wird. Der zumindest eine Rücksprung oder die zumindest eine Aussparung sind entweder nur an der Oberfläche oder Mantelfläche des Führungsrings vorgesehen oder sie reichen tiefer in den Führungsring, zum Beispiel bis in den Körper des Kupplungsvorsprunges.

Vorzugsweise ist der Außendurchmesser des Führungsrings oder Flansches zumindest gleich groß wie der Außendurchmesser des Gewindes. Besonders bevorzugt ist der Außendurchmesser des Führungsrings größer als der Außendurchmesser des Gewindes, so dass die Mantelfläche des Führungsrings das Gewinde überragt.

Vorzugsweise ist der Außendurchmesser des Führungsrings oder Flansches gleich groß wie der Außendurchmesser des zweiten Abschnitts des als Kupplungsvorsprung ausgebildeten Kupplungselements, wodurch eine besonders gute und glatte Führung der beiden Kupplungselemente aneinander entlang der gemeinsamen Längs- oder Drehachse bewirkt wird.

Vorzugsweise beträgt die Breite, d.h. die axiale Bereite in Bezug auf die Längs- oder Drehachse, des Führungsrings und/oder der Mantelfläche des Führungsrings zwischen 0,1 mm und 3 mm. Besonders bevorzugt verändert sich die (axiale) Breite des Führungsrings und/oder der Mantelfläche des Führungsrings zumindest über einen kreisbogenförmigen Abschnitt der Mantelfläche stetig, insbesondere aufgrund der Annäherung des zumindest einen Gewindegangs an den Führungsring.

Vorzugsweise schließt, insbesondere unmittelbar, an den Führungsring oder Flansch die den Kupplungsvorsprung umlaufende rillenförmige Vertiefung oder Einschnürung an, die ausgebildet ist, die Bruchgefahr des Kupplungsvorsprungs und / oder ersten Abschnitts aufgrund der Übertragung der schwingendend Antriebsbewegung zu verringern. Besonders bevorzugt weisen der Führungsring oder Flansch und die Einschnürung eine gemeinsame ringförmige Wand auf, an welcher der Führungsring an seiner von dem Gewinde abgewandten Seite endet und welche die Einschnürung axial zum Führungsring begrenzt. Damit wird ein besonders kompakter Aufbau des Kupplungselements oder des Kupplungsvorsprungs bewirkt.

Vorzugsweise ist der Führungsring oder Flansch von einem sich entlang der Längsachse durch den Kupplungsvorsprung erstreckenden Fluidkanal durchsetzt. Vorzugsweise umfasst der Fluidkanal eine zentrale Bohrung durch die Schwing- oder Antriebsachse des Handstücks, insbesondere durch das Kupplungselement und/oder den Kupplungsvorsprung und/oder den Führungsring, und ist zur Übertragung eines Kühlfluids, insbesondere eines Wasser-Luft-Gemisches oder von Wasser, ausgebildet.

Vorzugsweise umfassen der Kupplungsvorsprung und die Kupplungsausnehmung jeweils einen dritten Abschnitt zum Führen der beiden Kupplungselemente entlang deren gemeinsamer Längsachse, wobei der erste Abschnitt zur lösbaren Verbindung der beiden Kupplungselemente zwischen dem zweiten Abschnitt zur Positionierung der beiden Kupplungselemente entlang deren gemeinsamen Längsachse und dem dritten Abschnitt angeordnet ist. Der dritte Abschnitt ist insbesondere am freien, dem anderen Kupplungselement zugewandten Ende des Kupplungselements und/oder des Kupplungsvorsprungs angeordnet und/oder bildet dieses freie Ende. Der dritte Abschnitt erhöht die Stabilität während der Positionierung, Führung und/oder Lagerung der beiden Kupplungselemente aneinander noch zusätzlich. Selbstverständlich ist es auch möglich, dass die Kupplungsvorrichtung keinen ersten Abschnitt, sondern nur den dritten Abschnitt aufweist. Vorzugsweise umfasst der dritte Abschnitt zum Führen der beiden Kupplungselemente jeweils eine zylindrische Führungsfläche an dem Kupplungsvorsprung und in der Kupplungsausnehmung. Vorzugsweise ist der dritte Abschnitt unlösbar oder einteilig mit dem Kupplungsvorsprung und/oder der Kupplungsausnehmung ausgebildet. Vorzugsweise ist der Außendurchmesser des dritten Abschnitts geringer als der Außendurchmesser des ersten Abschnitts, insbesondere des Gewindes, und / oder des Führungsrings und / oder des zweiten Abschnitts.

Vorzugsweise ist das am schwingungsübertragenden Handstück vorgesehene Kupplungselement aus metallischem Material, das insbesondere Titan oder einer Titanlegierung umfasst, hergestellt und weist eine gehärtete Oberfläche, die insbesondere Titannitrid umfasst, auf.

Vorzugsweise ist das als Kupplungsvorsprung ausgebildete Kupplungselement an dem schwingungsübertragenden Handstück, insbesondere an dessen Schwing- oder Antriebsachse, und das als Kupplungsausnehmung ausgebildete Kupplungselement an dem Werkzeug angeordnet.

Vorzugsweise sind die beiden Kupplungselemente unlösbar, besonders bevorzugt einteilig, mit einem Bauteil des Handstücks, insbesondere mit der Antriebs- oder Schwingachse des Handstücks, und / oder mit dem Werkzeug verbunden.

Gemäß einem Ausführungsbeispiel ist ein schwingungsübertragendes Handstück, das mit einem mit Schwingungen betreibbaren Werkzeug verbindbar ist, vorgesehen, wobei das Handstück umfasst: eine schwingungsübertragende Antriebs- oder Schwingachse, ein mit der Schwingachse verbindbares oder verbundenes Kupplungselement, das als Kupplungsvorsprung ausgebildet ist, der in eine Kupplungsausnehmung an einem Kupplungselement des Werkzeugs einsetzbar ist, wobei der Kupplungsvorsprung einen als Gewinde mit zumindest einem Gewindegang ausgebildeten ersten Abschnitt zur lösbaren Verbindung mit dem Kupplungselement des Werkzeugs sowie einen zweiten Abschnitt zur Positionierung der beiden Kupplungselemente entlang einer gemeinsamen Längsachse aufweist, wobei der zweite Abschnitt derart ausgebildet ist, dass die beiden Kupplungselemente zueinander positionierbar, aneinander führbar und entlang der gemeinsamen Längsachse verschiebbar sind, bevor die beiden Kupplungselemente mittels des Gewindes des ersten Abschnitts lösbar miteinander verschraubbar sind, wobei an einem Ende des Gewindes ein den Kupplungsvorsprung umlaufender Führungsring oder Flansch vorgesehen ist, an dem der zumindest eine Gewindegang des Gewindes endet, so dass eine Mantelfläche des Führungsrings oder Flansches von dem zumindest einen Gewindegang des Gewindes nicht durchbrochen ist und vorzugsweise als durchgängige, zylindrische Mantelfläche ausgebildet ist.

Das Handstück und/oder das Kupplungselement und/oder der Kupplungsvorsprung des schwingungsübertragenden Handstücks kann/können vorzugsweise eines oder mehrere oder alle der im Vorstehenden und im Nachfolgenden beschriebenen Merkmale und/oder Eigenschaften aufweisen. Vorzugsweise ist das Handstück über das Kupplungselement und/oder den Kupplungsvorsprung mit einem mit Schwingungen betreibbaren Werkzeug, insbesondere mit einem mit Schwingungen betreibbaren Werkzeug mit den im Vorstehenden und im Nachfolgenden beschriebenen Merkmale und/oder Eigenschaften, lösbar verbindbar.

Die gegenständliche Kupplungsvorrichtung zeichnet sich durch folgende Vorteile aus.

Durch die Ausbildung eines Abschnitts an beiden Kupplungselementen der Kupplungsvorrichtung, welcher dazu dient beide Kupplungselemente zu deren gemeinsamen Drehachse zu positionieren und beide Kupplungselemente zueinander geführt und entlang der gemeinsamen Drehachse verschiebbar zu lagern, bevor die beiden Kupplungselemente mittels eines weiteren Abschnitts lösbar miteinander verbindbar sind, wird eine fehlerhafte Verbindung zwischen dem Werkzeug und dem Handstück vermieden. Insbesondere wird bei Ausbildung des weiteren Abschnitts als Schraubverbindung mit einem Innen- und Außengewinde durch die gezielte Führung der beiden Kupplungselemente zueinander ein unsachgemäßes Einsetzen des Außengewindes in das Innengewinde vermieden. Diese Vorteile werden durch das Vorsehen des an dem Ende des Gewindes angeordneten Führungsrings noch verstärkt.

Des Weiteren gewährleistet die erfindungsgemäße Kupplungsvorrichtung dem Anwender eine einfache und zeitsparende Befestigung des Werkzeuges mit dem Handstück. Mehrmaliges Ansetzen des ersten Kupplungselements an dem zweiten Kupplungselement, um vorzugsweise ein Außengewinde des einen Kupplungselements in das Innengewinde des zweiten Kupplungselements ordnungsgemäß einzusetzen, ist nicht mehr notwendig.

Im Rahmen der Erfindung versteht es sich selbstverständlich, dass die Kupplungsvorrichtung nicht auf schwingungsübertragende Handstücke mit einer Schwingungsquelle zur Präparation von Oberflächen von Zähnen beschränkt ist. Vielmehr können derartige Kupplungsvorrichtungen auch bei anderen angetriebenen medizinischen Handstücken verwendet werden, wie zum Beispiel bei rotierend angetriebenen Handstücken.

Nachfolgend wird die Erfindung anhand mehrerer Ausführungsbeispiele und in Verbindung mit den beigefügten Zeichnungen erläutert. Es zeigt die:
Figur 1 eine medizinische, insbesondere dentale, Behandlungsvorrichtung mit einem schwingungsübertragenden Handstück und einem daran angeschlossenen medizinischen, insbesondere zahnärztlichen, Werkzeug;
Figur 2 eine perspektivische Darstellung der Kupplungsvorrichtung mit einem ersten an einer Antriebsachse des Handstücks und einem zweiten am Werkzeug vorgesehenen Kupplungselement;
Figur 3 einen Querschnitt durch die Antriebsachse des Handstücks mit einem als Kupplungsvorsprung ausgebildeten Kupplungselement der Kupplungsvorrichtung;
Figur 4 einen Querschnitt durch das medizinische Werkzeug mit einem als Kupplungsausnehmung ausgebildeten Kupplungselement der Kupplungsvorrichtung;
Figur 5 eine Detailansicht der Kupplungsvorrichtung, bei der das Werkzeug und das Handstück, insbesondere das erste Kupplungselement mit dem zweiten Kupplungselement, verbunden ist;
Figur 6 ein Ausführungsbeispiel eines als Kupplungsvorsprung ausgebildeten Kupplungselements mit einem Gewinde als ersten Abschnitt zur lösbaren Verbindung der beiden Kupplungselemente und einem an dem Gewinde vorgesehenen Führungsring oder Flansch;
Figur 7 ein Ausführungsbeispiel eines als Kupplungsvorsprung ausgebildeten Kupplungselements mit einem dritten Abschnitt zum Führen der beiden Kupplungselemente entlang deren gemeinsamer Längsachse.

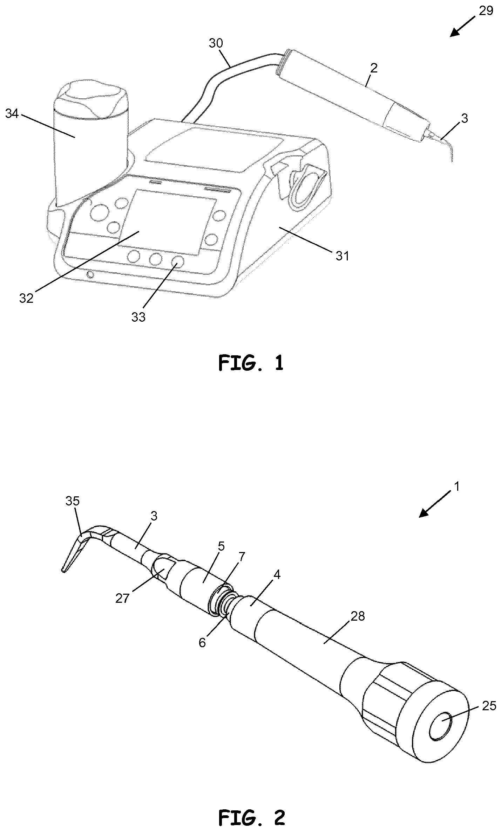

In der Figur 1 ist eine medizinische, insbesondere dentale, Behandlungsvorrichtung 29 mit einem schwingungsübertragenden Handstück 2 und einem medizinischen, insbesondere zahnärztlichen, vorzugsweise mit Schwingungen betreibbaren Werkzeug 3 gezeigt. In dem Handstück 2 ist eine Schwingungsquelle angeordnet, welche bevorzugt als Piezoantrieb ausgebildet ist. Das Werkzeug 3 ist bevorzugt mittels der Kupplungsvorrichtung direkt mit der Antriebsachse des Piezoantriebs lösbar verbunden, so dass das Werkzeug 3 mittels Schall oder Ultraschall aktivierbar ist. Ein Versorgungsschlauch 30 dient dazu das Handstück 2, insbesondere dessen Antrieb, mit der Steuereinheit 31 zu verbinden. Während des Betriebs des Handstücks 2 ist dieses sowie das Werkzeug 3 mit Arbeitsmedien, insbesondere mit elektrischer Energie sowie Spraywasser zur Kühlung des Werkzeugs, zu versorgen. Des Weiteren dient der Versorgungsschlauch 30 insbesondere dazu elektrische Signale und/ oder Daten zwischen der Steuereinheit 31 und dem Handstück 2 zu übertragen. Zur Anzeige und Einstellung der Betriebsparameter für das Handstück 2 sowie für das Werkzeug 3 weist die Steuereinheit 31 zumindest eine Anzeige 32 sowie zumindest ein Betätigungselement 33 auf. Ein an die Steuereinheit 31 anschließbare Behälter 34 dient als Fluidquelle für das Spraywasser zur Kühlung des Handstücks 2 und/ oder des Werkzeugs.

Die Figur 2 zeigt die erfindungsgemäße Kupplungsvorrichtung 1 mit einem ersten an einer Schwing- oder Antriebsachse 28 des Handstücks 2 und einem zweiten am Werkzeug 3 vorgesehenen Kupplungselement 4, 5. Das dargestellte, vorzugsweise mit Schwingungen betreibbare Werkzeug 2 zur Oberflächenbehandlung von Zähnen umfasst einen Werkzeugschaft, an welchem ein Arbeitskopf 35 angebracht ist. Der Arbeitskopf 35 kann unterschiedliche Formen aufweisen. An dem gegenüberliegenden Ende des Schaftes ist das Kupplungselement 5 angeordnet, um das Werkzeug 3 lösbar an dem anderen Kupplungselement 4, welches bevorzugt mit der Antriebsachse 28 des Handstücks 2 verbunden ist, zu befestigen. Das Kupplungselement 4 an der Antriebsachse 28 ist bevorzugt als Kupplungsvorsprung 6 ausgebildet, welcher in eine Kupplungsausnehmung 6 des anderen Kupplungselements 5 einsetzbar ist. Um das Werkzeug 3 fest an der Antriebsachse 28 zu befestigen, weist das Werkzeug 3 in diesem Ausführungsbeispiel einen Auflagebereich 27 auf, welcher bevorzugt in Form eines Mehrkants ausgebildet ist. Mittels eines Werkzeugschlüssels kann das Werkzeug 3 so fest mit der Antriebsachse 28 verbunden werden. Eine zentrale Bohrung 25 durch die Antriebsachse 28 und durch die Kupplungsvorrichtung 1 dient als Fluidkanal zur Übertragung von Spraywasser, insbesondere zur Werkzeuginnenkühlung.

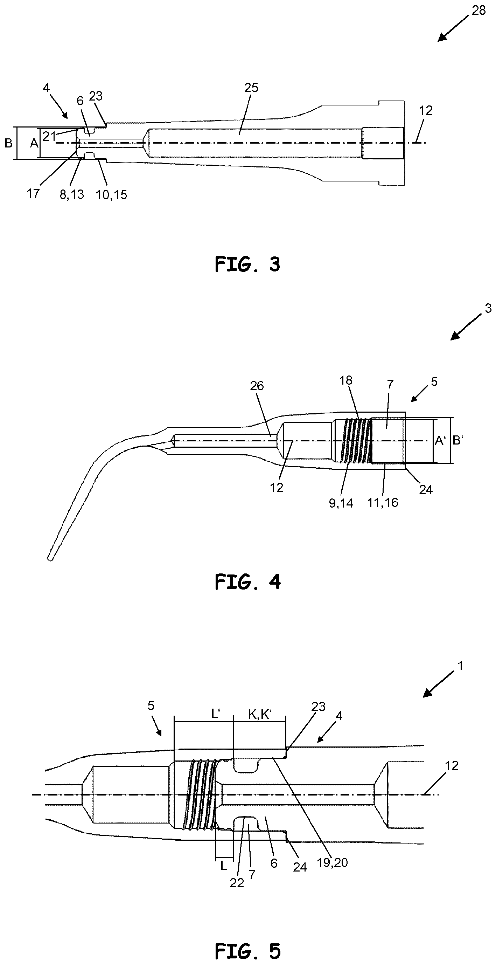

In der Figur 3 ist die Schwing- oder Antriebsachse 28 des Handstücks 2 mit dem als Kupplungsvorsprung 6 ausgebildeten Kupplungselement 4 der Kupplungsvorrichtung 1 abgebildet. Der erste Abschnitt 8 an dem Kupplungsvorsprung 6 zur lösbaren Verbindung beider Kupplungselemente 4, 5 ist in diesem Ausführungsbeispiel durch eine Schraubverbindung 13 ausgebildet, welche bevorzugt ein mehrgängiges Gewinde umfasst. Die Antriebsachse 28 mit dem Kupplungselement 4 ist bevorzugt aus Titan gefertigt und weist zumindest im Bereich der Schraubverbindung eine verschleißfeste Beschichtung auf. Der zweite Abschnitt 10 zur Positionierung der beiden Kupplungselemente 4, 5 zueinander ist durch eine zylindrische Führungsfläche 15 an dem Kupplungsvorsprung 6, welche sich entlang der Drehachse 12 erstreckt, gebildet. Der erste Abschnitt 8 ist vor dem zweiten Abschnitt 10 an dem vorderen Ende 17 des Kupplungsvorsprungs 6 angeordnet. Um den ersten Abschnitt 8 des Kupplungsvorsprungs 6 leichter in den korrespondierenden Abschnitt 9 der Kupplungsausnehmung 7 einführen zu können, weist der Kupplungsvorsprung 6 an seinem vorderen Ende 17 eine Fase 21 auf. Damit beide Kupplungselemente 4, 5 mittels des zweiten Abschnitts 10 zueinander geführt und entlang der gemeinsamen Drehachse 12 verschiebbar sind, bevor die beiden Kupplungselemente 4, 5 mittels des ersten Abschnitts 8 miteinander verbindbar sind, ist der Durchmesser A des ersten Abschnitts 8 an dem Kupplungsvorsprung 6 kleiner als der Durchmesser B des zweiten Abschnitts 10 ausgebildet.

An der Basisfläche der Schwing- oder Antriebsachse 28, von der sich der Kupplungsvorsprung 6 erstreckt, weist das Kupplungselement 4 eine Anschlagfläche 23 auf. Die Anschlagfläche 23 erstreckt sich bevorzugt in radialer Richtung um den Kupplungsvorsprung 6. Auch die Anschlagflächen 23 sind bevorzugt mit einer verschleißfesten Beschichtung versehen. Das korrespondierende Kupplungselement 5 an dem vorzugsweise mit Schwingungen betreibbaren Werkzeug 3 weist ebenfalls eine Anschlagfläche 24 auf, so dass beide Kupplungselemente 4, 5 mittels des ersten Abschnitt 8, 9, insbesondere mittels der Schraubverbindung 13, 14, in axialer Richtung zur gemeinsamen Drehachse 12 miteinander verspannbar sind.

Der Fluidkanal 25 in der Schwing- oder Antriebsachse 28 erstreckt in diesem Ausführungsbeispiel entlang der gemeinsamen Drehachse 12 durch das Kupplungselement 4, insbesondere durch den Kupplungsvorsprung 6 mit dem ersten und zweiten Abschnitt 8, 10 bis zu dem freien Ende 17 des Kupplungsvorsprungs 6.

Die Figur 4 zeigt das vorzugsweise mit Schwingungen betreibbare medizinische Werkzeug 3 mit dem als Kupplungsausnehmung 7 ausgebildeten Kupplungselement 5 der Kupplungsvorrichtung 1. Der erste Abschnitt 9 zur lösbaren Verbindung beider Kupplungselemente 4, 5 ist durch eine Schraubverbindung 14 mit einem Innengewinde ausgebildet, welches mit dem Außengewinde 13 an dem Kupplungsvorsprung 6 verbindbar ist. Der erste Abschnitt 9 ist an dem hinteren Ende 18 der Kupplungsausnehmung 7 angeordnet. Der zweite Abschnitt 11 in der Kupplungsausnehmung 7 zur Positionierung der beiden Kupplungselemente 4, 5 zueinander ist ebenfalls durch eine zylindrische Führungsfläche 16 gebildet, welche sich in axialer Richtung zur gemeinsamen Drehachse 12 erstreckt. Zur Aufnahme des in Figur 3 gezeigten Kupplungsvorsprungs 6 in der Kupplungsausnehmung 7 ist auch der Durchmesser A' des ersten Abschnitts 9 kleiner als der Durchmesser B' des zweiten Abschnitts 11 ausgebildet. Beide Kupplungselemente 4, 5 sind so mittels des zweiten Abschnitts 10, 11 zueinander geführt ineinander verschiebbar, bevor diese mittels des ersten Abschnitts 8, 9 und der Anschlagflächen 23, 24 miteinander verspannbar sind. Der Fluidkanal 26 in dem Werkzeug 3 ist mittels der Kupplungsvorrichtung 1 mit dem Fluidkanal 25 der Antriebsachse verbindbar.

In der Figur 5 ist eine Detailansicht der Kupplungsvorrichtung 1 abgebildet, bei der das Werkzeug 3 und das Handstück 2, insbesondere das erste Kupplungselement 4 mit dem zweiten Kupplungselement 5, fest verbunden sind. Diese feste und lösbare Verbindung wird dadurch erreicht, dass beide Kupplungselemente 4, 5 zunächst zu deren gemeinsamen Drehachse 12 positioniert werden, in dem der Kupplungsvorsprung 6 mit der Mantelfläche 19 in die Kupplungsausnehmung 7 mit der Mantelfläche 20 eingeführt wird bis der zweite Abschnitt 10 des Kupplungsvorsprungs 6 zumindest teilweise in dem zweiten Abschnitt 11 der Kupplungsausnehmung 7 angeordnet ist. Anschließend werden beide Kupplungselemente 4, 5 zueinander oder aneinander geführt und entlang der gemeinsamen Drehachse 12 verschoben, bis der erste Abschnitt 8 des Kupplungsvorsprungs 6 zumindest teilweise in den ersten Abschnitt 9 der Kupplungsausnehmung 7 greift. Schließlich werden beide Kupplungselemente 4, 5 mittels der Schraubverbindung an dem ersten Abschnitts 8, 9 miteinander verschraubt und mittels der Anschlagflächen 23, 24 fest gegeneinander verspannt.

Eine Einschnürung 22 in der Mantelfläche 19 des Kupplungsvorsprung 6 dient dazu, bei der Übertragung einer, insbesondere schwingenden, Antriebsbewegung von dem Handstück 2 auf das Werkzeug 3, den ersten Abschnitt 8 an dem Kupplungsvorsprung 6, insbesondere die Schraubverbindung mit dem Innen- und Außengewinde, zu entlasten und / oder die Bruchgefahr des ersten Abschnitts 8 zu verringern.

Die Längen L, L' und K, K' des ersten Abschnitts 8, 9 und des zweiten Abschnitts 10, 11 an dem Kupplungsvorsprung 6 und der Kupplungsausnehmung 7 sind derart gewählt, dass beide Kupplungselemente 4, 5 zueinander geführt und entlang der gemeinsamen Drehachse 12 verschiebbar sind, bevor die diese mittels des ersten Abschnitts 8, 9 lösbar miteinander verbindbar sind. Hierzu ist insbesondere die Länge L des ersten Abschnitts 8 an dem Kupplungsvorsprung 6 kleiner als die Länge K' des zweiten Abschnitts 11 in der Kupplungsausnehmung 7, so dass der zweite Abschnitt 10 des Kupplungsvorsprung 6 in die Kupplungsausnehmung 7 greift, bevor der erste Abschnitt 8 des Kupplungsvorsprungs 6 in den ersten Abschnitt 9 der Kupplungsausnehmung einführbar ist. Die Länge K des zweiten Abschnitts 10 an dem Kupplungsvorsprung 6 sowie die Länge K' des zweiten Abschnitts 11 an der Kupplungsausnehmung 7 sind möglichst groß gewählt, so dass auf Grund der Überlappung der beiden Abschnitte 10, 11 eine exakte Positionierung und Führung der beiden Kupplungselemente 4, 5 zueinander erfolgen kann.

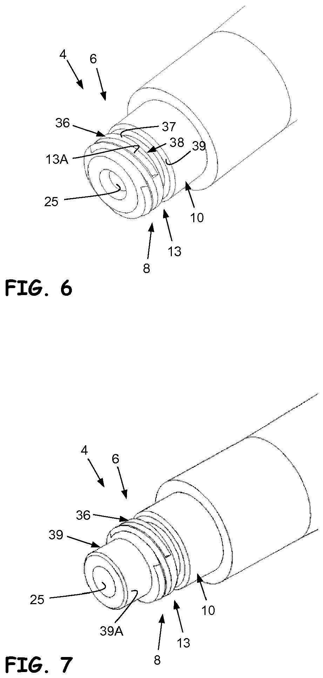

Die Figuren 6 und 7 zeigen ein als Kupplungsvorsprung 6 ausgebildetes Kupplungselement 4 mit einem Gewinde 13 mit zumindest einem Gewindegang 13A als ersten Abschnitt 8 zur lösbaren Verbindung der beiden Kupplungselemente 4, 5. Das Kupplungselement 4 und der Kupplungsvorsprung 6 sind vorzugsweise an einem Handstück 2, insbesondere an der Schwing- oder Antriebsachse 28, vorgesehen oder als Teil davon ausgebildet, insbesondere einteilig mit der Schwing- oder Antriebsachse 28 verbunden.

An einem Ende des Gewindes 13, insbesondere an jenem Ende des Gewindes 13, das von dem dem anderen Kupplungselement 5 zugewandten (freien) Ende des Kupplungsvorsprungs 6 weiter entfernt ist, ist ein den Kupplungsvorsprung 6 umlaufender Führungsring oder Flansch 36 vorgesehen. An dem Führungsring 36 endet der zumindest eine Gewindegang 13A des Gewindes 13, so dass eine Mantelfläche 37 des Führungsrings 36 von dem zumindest einen Gewindegang 13A des Gewindes 13 nicht durchbrochen ist. Die Mantelfläche 37 ist als durchgängige, zylindrische Mantelfläche ausgebildet. Der Führungsring 36 mit der durchgängigen, zylindrischen Mantelfläche 37 bildet zusätzlich zu dem zweiten Abschnitt 10 zur Positionierung der beiden Kupplungselemente 4, 5 einen weiteren Lagerabschnitt zum Führen und Lagern der beiden Kupplungselemente 4, 5 aneinander.

An den Führungsring oder Flansch 36 schließt eine den Kupplungsvorsprung 6 umlaufende Einschnürung 22 an, die ausgebildet ist, die Bruchgefahr des Kupplungsvorsprungs 6 und / oder ersten Abschnitts 8 aufgrund der Übertragung der schwingendend Antriebsbewegung zu verringern. Der Führungsring 36 und die Einschnürung 22 grenzen unmittelbar aneinander und weisen eine gemeinsame ringförmige Wand 38 auf, an welcher der Führungsring 36 an seiner von dem Gewinde 13 abgewandten Seite endet und welche die Einschnürung 22 axial zum Führungsring 36 begrenzt.

Eine zweite ringförmige Wand 39, die der ersten ringförmigen Wand 38 insbesondere im Wesentlichen parallel gegenüber liegt, begrenzt die Einschnürung 22. An die Einschnürung 22 grenzt der zweiten Abschnitt 10 zur Positionierung der beiden Kupplungselemente 4, 5, wobei die zweite ringförmige Wand 39 insbesondere die Einschnürung 22 mit dem zweiten Abschnitt 10 verbindet.

Der Führungsring 36 ist von dem sich entlang der Längsachse 12 durch den Kupplungsvorsprung 6 erstreckenden und im Vorstehenden bereits beschriebenen Fluidkanal 25 durchsetzt.

Der in der Figur 7 dargestellte Kupplungsvorsprung 6 weist einen dritten Abschnitt 39 zum Führen der beiden Kupplungselemente 4, 5 entlang deren gemeinsamer Längsachse 12 auf. Der dritte Abschnitt 39 ist zylindrisch ausgebildet und / oder weist eine zylindrische Führungsfläche 39A auf. Der erste Abschnitt 8 zur lösbaren Verbindung der beiden Kupplungselemente 4, 5, insbesondere das Gewinde 13 und/oder der Führungsring oder Flansch 36, ist zwischen dem zweiten Abschnitt 10 zur Positionierung der beiden Kupplungselemente 4, 5 entlang deren gemeinsamen Längsachse 12 und dem dritten Abschnitt 39 angeordnet. Selbstverständlich ist es auch möglich, den dritten Abschnitt 39, 39A an den Kupplungselementen 4, 5 der Figuren 1 - 5 vorzusehen, d.h. insbesondere an Kupplungselementen 4, 5, die keinen Führungsring 36 aufweisen. Alternativ oder zusätzlich ist es bei allen Ausführungsbeispielen der Figuren 1 - 7 auch möglich, nur den dritten Abschnitt 39, 39A zum Positionieren, Führen und Verschieben der Kupplungselementen 4, 5 entlang der gemeinsamen Längsachse 12 vorzusehen und demgemäß den zweiten Abschnitt 10, 11 an den Kupplungselementen 4, 5 nicht vorzusehen.

## Patentansprüche

1. Kupplungsvorrichtung (1) zur Übertragung einer Antriebsbewegung von einem schwingungsübertragenden Handstück (2) auf ein medizinisches, insbesondere zahnärztliches, Werkzeug (3), umfassend: ein erstes am Handstück (1) vorgesehenes Kupplungselement (4) und ein zweites am Werkzeug (3) vorgesehenes Kupplungselement (5), wobei eines der beiden Kupplungselemente (4, 5) als Kupplungsvorsprung (6) ausgebildet ist, der in eine Kupplungsausnehmung (7) an dem anderen Kupplungselement (4, 5) einsetzbar ist, wobei der Kupplungsvorsprung (6) und die Kupplungsausnehmung (7) jeweils einen ersten Abschnitt (8, 9) zur lösbaren Verbindung der beiden Kupplungselemente (4, 5) sowie jeweils einen zweiten Abschnitt (10, 11) zur Positionierung der beiden Kupplungselemente (4, 5) entlang deren gemeinsamen Längsachse (12) aufweist, wobei der zweite Abschnitt (10, 11) an dem Kupplungsvorsprung (6) und an der Kupplungsausnehmung (7) derart ausgebildet ist, dass die beiden Kupplungselemente (4, 5) zueinander positionierbar, aneinander geführt und entlang der gemeinsamen Längsachse (12) verschiebbar sind, bevor die beiden Kupplungselemente (4, 5) mittels des ersten Abschnitts (8, 9) lösbar miteinander verbindbar sind, wobei die ersten Abschnitte (8, 9) zur lösbaren Verbindung der beiden Kupplungselemente (4, 5) jeweils ein Gewinde (13, 14) mit jeweils zumindest einem Gewindegang (13A) aufweisen, **dadurch gekennzeichnet, dass** an einem Ende jenes Gewindes (13), das an dem als Kupplungsvorsprung (6) ausgebildeten Kupplungselement (4) angeordnet ist, ein den Kupplungsvorsprung (6) umlaufender Führungsring (36) vorgesehen ist, an dem der zumindest eine Gewindegang (13A) des Gewindes (13) endet, so dass eine Mantelfläche (37) des Führungsrings (36) von dem zumindest einen Gewindegang (13A) des Gewindes (13) nicht durchbrochen ist und vorzugsweise als durchgängige, zylindrische Mantelfläche (37) ausgebildet ist.

2. Kupplungsvorrichtung (1) nach Anspruch 1, **dadurch gekennzeichnet, dass** der Führungsring (36) und / oder die Mantelfläche (37) des Führungsrings (36) zumindest einen Rücksprung oder eine Aussparung aufweist / aufweisen.

3. Kupplungsvorrichtung (1) nach Anspruch 1 oder 2, **dadurch gekennzeichnet, dass** der Außendurchmesser des Führungsrings (36) zumindest gleich groß ist wie der Außendurchmesser des Gewindes (13).

4. Kupplungsvorrichtung (1) nach einem der vorstehenden Ansprüche, **dadurch gekennzeichnet, dass**
der Außendurchmesser des Führungsrings (36) gleich groß ist wie der Außendurchmesser des zweiten Abschnitts (10) des als Kupplungsvorsprung (6) ausgebildeten Kupplungselements (4).

5. Kupplungsvorrichtung (1) nach einem der vorstehenden Ansprüche, **dadurch gekennzeichnet, dass**
die Breite der Mantelfläche (37) des Führungsrings (36) zwischen 0,1 mm und 3 mm beträgt.

6. Kupplungsvorrichtung (1) nach einem der vorstehenden Ansprüche, **dadurch gekennzeichnet, dass**
die Breite der Mantelfläche (37) des Führungsrings (36) sich zumindest über einen kreisbogenförmigen Abschnitt der Mantelfläche (37) stetig verändert.

7. Kupplungsvorrichtung (1) nach einem der vorstehenden Ansprüche, **dadurch gekennzeichnet, dass**
an den Führungsring (36) eine den Kupplungsvorsprung (6) umlaufende Einschnürung (22) anschließt, die ausgebildet ist, die Bruchgefahr des Kupplungsvorsprungs (6) und / oder ersten Abschnitts (8) aufgrund der Übertragung der schwingendend Antriebsbewegung zu verringern.

8. Kupplungsvorrichtung (1) nach Anspruch 7, **dadurch gekennzeichnet, dass** der Führungsring (36) und die Einschnürung (22) eine gemeinsame ringförmige Wand (38) aufweisen, an welcher der Führungsring (36) an seiner von dem Gewinde (13) abgewandten Seite endet und welche die Einschnürung (22) axial zum Führungsring (36) begrenzt.

9. Kupplungsvorrichtung (1) nach einem der vorstehenden Ansprüche, **dadurch gekennzeichnet, dass**
der Führungsring (36) von einem sich entlang der Längsachse (12) durch den Kupplungsvorsprung (6) erstreckenden Fluidkanal (25) durchsetzt ist.

10. Kupplungsvorrichtung (1) nach einem der vorstehenden Ansprüche, **dadurch gekennzeichnet, dass**
der Kupplungsvorsprung (6) und die Kupplungsausnehmung (7) jeweils einen dritten Abschnitt (39) zum Führen der beiden Kupplungselemente (4, 5) entlang deren gemeinsamer Längsachse (12) aufweisen, wobei der erste Abschnitt (8, 9) zur lösbaren Verbindung der beiden Kupplungselemente (4, 5) zwischen dem zweiten Abschnitt (10, 11) zur Positionierung der beiden Kupplungselemente (4, 5) entlang deren gemeinsamen Längsachse (12) und dem dritten Abschnitt (39) angeordnet ist.

11. Kupplungsvorrichtung (1) nach Anspruch 10, **dadurch gekennzeichnet, dass** der dritte Abschnitt (39) zum Führen der beiden Kupplungselemente (4, 5) jeweils eine zylindrische Führungsfläche (39A) an dem Kupplungsvorsprung (6) und in der Kupplungsausnehmung (7) aufweist.

12. Kupplungsvorrichtung (1) nach einem der vorstehenden Ansprüche, **dadurch gekennzeichnet, dass**
die Gewinde (13, 14) der beiden Kupplungselemente (4, 5) jeweils als mehrgängige, insbesondere dreigängige, Gewinde ausgebildet sind.

13. Kupplungsvorrichtung (1) nach einem der vorstehenden Ansprüche, **dadurch gekennzeichnet, dass**
das am schwingungsübertragenden Handstück (2) vorgesehene Kupplungselement (4) aus metallischem Material, das insbesondere Titan umfasst, hergestellt ist und eine gehärtete Oberfläche, die insbesondere Titannitrid umfasst, aufweist.

14. Kupplungsvorrichtung (1) nach einem der vorstehenden Ansprüche, **dadurch gekennzeichnet, dass**
das als Kupplungsvorsprung (6) ausgebildete Kupplungselement (4) an dem schwingungsübertragenden Handstück (2) und das als Kupplungsausnehmung (7) ausgebildete Kupplungselement (5) an dem Werkzeug (3) angeordnet ist.

15. Schwingungsübertragendes Handstück (2), das mit einem mit Schwingungen betreibbaren Werkzeug (3) verbindbar ist, wobei das Handstück (2) umfasst: eine schwingungsübertragende Schwingachse (28), ein mit der Schwingachse (28) verbindbares oder verbundenes Kupplungselement (4), das als Kupplungsvorsprung (6) ausgebildet ist, der in eine Kupplungsausnehmung (7) an einem Kupplungselement (5) des Werkzeugs (3) einsetzbar ist, wobei der Kupplungsvorsprung (6) einen als Gewinde (13) mit zumindest einem Gewindegang (13A) ausgebildeten ersten Abschnitt (8) zur lösbaren Verbindung mit dem Kupplungselement (5) des Werkzeugs (3) sowie einen zweiten Abschnitt (10) zur Positionierung der beiden Kupplungselemente (4, 5) entlang einer gemeinsamen Längsachse (12), zum aneinander Positionieren und Führen und zum entlang der gemeinsamen Längsachse (12) Verschieben der beiden Kupplungselemente (4, 5) aufweist, bevor die beiden Kupplungselemente (4, 5) mittels des Gewindes (13) des ersten Abschnitts (8) lösbar miteinander verschraubbar sind, **dadurch gekennzeichnet, dass** an einem Ende des Gewindes (13) ein den Kupplungsvorsprung (6) umlaufender Führungsring (36) vorgesehen ist, an dem der zumindest eine Gewindegang (13A) des Gewindes (13) endet, so dass eine Mantelfläche (37) des Führungsrings (36) von dem zumindest einen Gewindegang (13A) des Gewindes (13) nicht durchbrochen ist und vorzugsweise als durchgängige, zylindrische Mantelfläche (37) ausgebildet ist.

## Claims

1. A coupling device (1) for transferring a driving motion from a vibration transferring handpiece (2) to a medical, in particular dental, tool (3), comprising: a first coupling element (4) which is provided on the handpiece (2), and a second coupling element (5) which is provided on the tool (3), wherein one of the two coupling elements is designed as a coupling protrusion (6), which can be inserted into a coupling recess (7) on the other coupling element, wherein the coupling protrusion (6) and the coupling recess (7) each have a first section (8, 9) for releasable connection of the two coupling elements (4, 5) and a second section (10, 11) for positioning the two coupling elements (4, 5) along their joint longitudinal axis (12), wherein the second section (10, 11) on the coupling protrusion (6) and on the coupling recess (7) is formed such that the two coupling elements (4, 5) can be positioned relative to one another, are guided along one another and can be displaced along the joint longitudinal axis (12) before the two coupling elements (4, 5) can be releasably connected to one another through the first section (8, 9), wherein the first sections (8, 9) for releasable connection of the two coupling elements (4, 5) each have a thread (13, 14) with at least one thread flight (13A) each, **characterized in that**
a guide ring (36) which runs around the coupling protrusion (6) is provided on one end of that thread (13) which is arranged on the coupling element (4) designed as a coupling protrusion (6), wherein the at least one thread flight (13A) of the thread (13) ends at the guide ring (36) so that a lateral surface (37) of the guide ring (36) is not interrupted by the at least one thread flight (13A) of the thread (13) and is preferably designed as a continuous cylindrical lateral surface (37).

2. The coupling device (1) according to claim 1, **characterized in that** the guide ring (36) and/or the lateral surface (37) of the guide ring (36) comprises/comprise at least one setback or one recess.

3. The coupling device (1) according to claim 1 or 2, **characterized in that** the outside diameter of the guide ring (36) is at least as large as the outside diameter of the thread (13).

4. The coupling device (1) according to any one of the preceding claims, **characterized in that**
the outside diameter of the guide ring (36) is the same size as the outside diameter of the second section (10) of the coupling element (4) which is designed as a coupling protrusion (6).

5. The coupling device (1) according to any one of the preceding claims, **characterized in that**
the width of the lateral surface (37) of the guide ring (36) is between 0,1 mm and 3 mm.

6. The coupling device (1) according to any one of the preceding claims, **characterized in that**
the width of the lateral surface (37) of the guide ring (36) changes continuously over at least an arc-shaped section of the lateral surface (37).

7. The coupling device (1) according to any one of the preceding claims, **characterized in that**
a constriction (22) running around the coupling protrusion (6) and designed to reduce the risk of breakage of the coupling protrusion (6) and/or the first section (8) due to the transfer of the vibrating driving movement follows the guide ring (36).

8. The coupling device (1) according to claim 7, **characterized in that** the guide ring (36) and the constriction (22) have a shared annular wall (38) at which the guide ring (36) ends on its side facing away from the thread (13) and which borders the constriction (22) axially relative to the guide ring (36).

9. The coupling device (1) according to any one of the preceding claims, **characterized in that**
the guide ring (36) is penetrated by a fluid channel (25) which extends along the longitudinal axis (12) through the coupling protrusion (6).

10. The coupling device (1) according to any one of the preceding claims, **characterized in that**
the coupling protrusion (6) and the coupling recess (7) each comprise a third section (39) for guiding the two coupling elements (4, 5) along their shared longitudinal axis (12), wherein the first section (8, 9) for releasable connection of the two coupling elements (4, 5) is arranged between the second section (10, 11) for positioning the two coupling elements (4, 5) along their shared longitudinal axis (12) and the third section (39).

11. The coupling device (1) according to claim 10, **characterized in that** the third section (39) for guiding the two coupling elements (4, 5) comprises a cylindrical guide surface (39A) on the coupling protrusion (6) and in the coupling recess (7).

12. The coupling device (1) according to any one of the preceding claims, **characterized in that**
the threads (13, 14) of the two coupling elements (4, 5) are designed as multi-flight threads, in particular as three-flight threads.

13. The coupling device (1) according to any one of the preceding claims, **characterized in that**
the coupling element (4) provided on the vibration-transmitting handpiece (2) is made of a metallic material, which in particular comprises titanium, and comprises a hardened surface which includes in particular titanium nitride.

14. The coupling device (1) according to any one of the preceding claims, **characterized in that**
the coupling element (4) designed as a coupling protrusion (6) is arranged on the vibration-transmitting handpiece (2), and the coupling element (5) designed as a coupling recess (7) is arranged on the tool (3).

15. A vibration-transmitting handpiece (2), which can be connected to a tool (3) that can be operated with vibrations, wherein the handpiece (2) comprises: a vibration-transmitting vibrating axle (28), a coupling element (4) that is or can be coupled to the vibrating axle (28) and is designed as a coupling protrusion (6) which can be inserted into a coupling recess (7) on a coupling element (5) of the tool (3), wherein the coupling protrusion (6) comprises a first section (8) for releasable connection to the coupling element (5) of the tool (3) which is designed as a thread (13) with at least one thread flight (13A) and a second section (10) for positioning the two coupling elements (4, 5) along a common longitudinal axis (12), for positioning to one another and for guiding and for displacing along the shared longitudinal axis (12) before the two coupling elements (4, 5) can be releasably screw-connected to one another by means of the thread (13) of the first section (8), **characterized in that**
a guide ring (36) which runs around the coupling protrusion (6) is provided on one end of the thread (13), wherein the at least one thread flight (13A) of the thread (13) ends at the guide ring (36) so that a lateral surface (37) of the guide ring (36) is not interrupted by the at least one thread flight (13A) of the thread (13) and is preferably designed as a continuous cylindrical lateral surface (37).

## Revendications

1. Dispositif d'accouplement (1) pour la transmission d'un mouvement d'entraînement d'une pièce à main (2) transmettant des vibrations à un outil (3) médical, en particulier dentaire, comprenant: un premier élément d'accouplement (4) prévu au niveau de la pièce à main (1) et un deuxième élément d'accouplement (5) prévu au niveau de l'outil (3), dans lequel l'un des deux éléments d'accouplement (4, 5) est réalisé en tant que saillie d'accouplement (6) insérable dans un évidement d'accouplement (7) au niveau de l'autre élément d'accouplement (4, 5), dans lequel la saillie d'accouplement (6) et l'évidement d'accouplement (7) présentent respectivement une première partie (8, 9) pour la liaison amovible des deux éléments d'accouplement (4, 5) ainsi que respectivement une deuxième partie (10, 11) pour le positionnement des deux éléments d'accouplement (4, 5) le long de leur axe longitudinal (12) commun, dans lequel la deuxième partie (10, 11) est réalisée au niveau de la saillie d'accouplement (6) et de l'évidement d'accouplement (7) de telle sorte que les deux éléments d'accouplement (4, 5) peuvent être positionnés l'un par rapport à l'autre, être amenés l'un contre l'autre et être déplacés le long de l'axe longitudinal commun (12) avant que les deux éléments d'accouplement (4, 5) puissent être reliés l'un à l'autre de façon amovible au moyen de la première partie (8, 9), dans lequel les premières parties (8, 9) pour la liaison amovible des deux éléments d'accouplement (4, 5) présentent respectivement un filetage (13, 14) avec respectivement au moins un pas de filet (13A), **caractérisé en ce qu'**à une extrémité de ce filetage (13) qui est disposé au niveau de l'élément d'accouplement (4) réalisé en tant que saillie d'accouplement (6), une bague de guidage (36) faisant le tour de la saillie d'accouplement (6) est prévue, au niveau de laquelle l'au moins un pas de filet (13A) du filetage (13) se termine de sorte qu'une surface enveloppante (37) de la bague de guidage (36) n'est pas percée par l'au moins un pas de filet (13A) du filetage (13) et est de préférence réalisée en tant que surface enveloppante (37) cylindrique continue.

2. Dispositif d'accouplement (1) selon la revendication 1, **caractérisé en ce que** la bague de guidage (36) et/ou la surface enveloppante (37) de la bague de guidage (36) présente/présentent au moins un retrait ou un creux.

3. Dispositif d'accouplement (1) selon la revendication 1 ou 2, **caractérisé en ce que** le diamètre extérieur de la bague de guidage (36) est au moins aussi grand que le diamètre extérieur du filetage (13).

4. Dispositif d'accouplement (1) selon l'une des revendications précédentes, **caractérisé en ce**
**que** le diamètre extérieur de la bague de guidage (36) est aussi grand que le diamètre extérieur de la deuxième partie (10) de l'élément d'accouplement (4) réalisé en tant que saillie d'accouplement (6).

5. Dispositif d'accouplement (1) selon l'une des revendications précédentes, **caractérisé en ce**
**que** la largeur de la surface enveloppante (37) de la bague de guidage (36) est comprise entre 0,1 mm et 3 mm.

6. Dispositif d'accouplement (1) selon l'une des revendications précédentes, **caractérisé en ce**
**que** la largeur de la surface enveloppante (37) de la bague de guidage (36) varie de façon constante au moins sur une partie en forme d'arc de cercle de la surface enveloppante (37).

7. Dispositif d'accouplement (1) selon l'une des revendications précédentes, **caractérisé en ce**
**qu'**au niveau de la bague de guidage (36), un rétrécissement (22) faisant le tour de la saillie d'accouplement (6) est en jonction, lequel est réalisé pour réduire le risque de cassure de la saillie d'accouplement (6) et/ou de la première partie (8) en raison de la transmission du mouvement d'entraînement à vibrations.

8. Dispositif d'accouplement (1) selon la revendication 7, **caractérisé en ce que** la bague de guidage (36) et le rétrécissement (22) présentent une paroi annulaire commune (38) au niveau de laquelle se termine la bague de guidage (36) au niveau de son côté tournant le dos au filetage (13) et laquelle délimite le rétrécissement (22) axialement à la bague de guidage (36).

9. Dispositif d'accouplement (1) selon l'une des revendications précédentes, **caractérisé en ce**
**que** la bague de guidage (36) est traversée par un canal de fluide (25) s'étendant le long de l'axe longitudinal (12) à travers la saillie d'accouplement (6).

10. Dispositif d'accouplement (1) selon l'une des revendications précédentes, **caractérisé en ce**
**que** la saillie d'accouplement (6) et l'évidement d'accouplement (7) présentent respectivement une troisième partie (39) pour guider les deux éléments d'accouplement (4, 5) le long de leur axe longitudinal commun (12), dans lequel la première partie (8, 9) pour la liaison amovible des deux éléments d'accouplement (4, 5) est disposée entre la deuxième partie (10, 11) pour le positionnement des deux éléments d'accouplement (4, 5) le long de leur axe longitudinal commun (12) et la troisième partie (39).

11. Dispositif d'accouplement (1) selon la revendication 10, **caractérisé en ce que** la troisième partie (39) pour le guidage des deux éléments d'accouplement (4, 5) présente respectivement une surface de guidage cylindrique (39A) au niveau de la saillie d'accouplement (6) et dans l'évidement d'accouplement (7).

12. Dispositif d'accouplement (1) selon l'une des revendications précédentes, **caractérisé en ce**
**que** les filetages (13, 14) des deux éléments d'accouplement (4, 5) sont respectivement réalisés en tant que filetages à filets multiples, en particulier à trois filets.

13. Dispositif d'accouplement (1) selon l'une des revendications précédentes, **caractérisé en ce**
**que** l'élément d'accouplement (4) prévu sur la pièce à main (2) transmettant des vibrations est fabriqué en un matériau métallique comprenant en particulier du titane et présente une surface durcie comprenant en particulier du nitrure de titane.

14. Dispositif d'accouplement (1) selon l'une des revendications précédentes, **caractérisé en ce**
**que** l'élément d'accouplement (4) réalisé en tant que saillie d'accouplement (6) est disposé au niveau de la pièce à main (2) transmettant des vibrations et que l'élément d'accouplement (5) réalisé en tant qu'évidement d'accouplement (7) est disposé au niveau de l'outil (3).

15. Pièce à main (2) transmettant des vibrations, laquelle peut être reliée à un outil (3) exploitable avec des vibrations, dans laquelle la pièce à main (2) comprend: un axe oscillant (28) transmettant des vibrations, un élément d'accouplement (4) relié, ou pouvant être relié à l'axe oscillant (28), lequel est réalisé en tant que saillie d'accouplement (6) insérable dans un évidement d'accouplement (7) au niveau d'un élément d'accouplement (5) de l'outil (3), dans laquelle la saillie d'accouplement (6) présente une première partie (8) réalisée en tant que filetage (13) avec au moins un pas de filet (13A) pour la liaison amovible avec l'élément d'accouplement (5) de l'outil (3) ainsi qu'une deuxième partie (10) pour le positionnement des deux éléments d'accouplement (4, 5) le long d'un axe longitudinal commun (12), pour le positionnement et le guidage l'un contre l'autre et pour le déplacement le long de l'axe longitudinal commun (12) des deux éléments d'accouplement (4, 5) avant que les deux éléments d'accouplement (4, 5) puissent être vissés ensemble de façon amovible au moyen du filetage (13) de la première partie (8), **caractérisée en ce qu'**à une extrémité du filetage (13), une bague de guidage (36) faisant le tour de la saillie d'accouplement (6) est prévue, au niveau de laquelle se termine l'au moins un pas de filet (13A) du filetage (13) de sorte qu'une surface enveloppante (37) de la bague de guidage (36) n'est pas percée par l'au moins un pas de filet (13A) du filetage (13) et est de préférence réalisée en tant que surface enveloppante cylindrique continue (37).
